# EUROPEAN PATENT SPECIFICATION

(11) **EP 3 937 147 B1**
(45) Date of publication and mention of the grant of the patent: **22.05.2024**
(21) Application number: 21184210.9
(22) Date of filing: 07.07.2021
(51) Int. Cl.: G08B 25/10, G08B 17/00, G08B 25/00, H04W 8/20

(54) **ALARM SYSTEM, ALARM, SETTING METHOD, AND PROGRAM**
ALARMSYSTEM, ALARM, EINSTELLVERFAHREN UND PROGRAMM
SYSTÈME D'ALARME, ALARME, PROCÉDÉ DE RÉGLAGE ET PROGRAMME

(30) Priority: 09.07.2020 JP 2020118721
(43) Date of publication of application: 12.01.2022
(73) Proprietor: Panasonic Intellectual Property Management Co., Ltd., Osaka-shi, Osaka 540-6207 (JP)
(72) Inventor: TAKAHASHI, Hideaki, Osaka 540-6207 (JP); CHINZAKA, Mai, Osaka 540-6207 (JP)
(74) Representative: Appelt, Christian W.

(56) References cited:
- EP-A1- 2 897 395
- EP-A1- 2 897 396
- JP-A- 2014 041 627
- JP-A- 2016 212 896
- JP-B2- 5 243 855

## Description

### Technical Field

The present disclosure relates to an alarm system, a setting method, and a program.

### Background Art

In general, an alarm system has been provided which uses a radio signal to cause a plurality of alarms to operate in an interconnected manner. In such an alarm system, the plurality of alarms are installed at a plurality of locations, and when any of the alarms detects a fire, the alarm outputs an alarm and transmits information for notification of the detection of the fire as a radio signal to the other alarms. For example, Document 1 (JP 2011-133979 A) discloses a system including a plurality of alarms. One specific alarm of the plurality of alarms is defined as a master device, and the other alarms of the plurality of alarms are defined as slave devices. The master device is configured to transmit a warning message for notification of a fire to each of the slave devices. Thus, the plurality of alarms, but not only the alarm at the location of the fire, operate in an interconnected manner to output alarms to quickly and reliably notify a person of the presence of the fire.

EP 2 897 396 A1 discloses that in a wireless communication system, a control unit of a first wireless station which carries out registration processing transmits a registration start message prompting registration, through a wireless transmission and reception unit to second wireless stations, which are other wireless stations. A control unit of the second wireless station, upon receiving the registration start message, transmits a response message including an identification code of the second wireless station, through a wireless transmission and reception unit to the first wireless station. The control unit of the first wireless station, upon receiving the response message, stores registration information including the identification codes of all of the second wireless stations that have replied and an identification code of the first wireless station, and transmits a registration message including the registration information to all of the second wireless stations that have replied, through the wireless transmission and reception unit.

EP 2 897 395 A1 discloses a wireless communication system that includes multiple wireless stations having mutually different identification codes. A control unit of a first wireless station, which carries out registration processing, sets the first wireless station including this control unit as a master, and transmits a registration start message prompting registration, through a wireless transmission and reception unit, to all of other wireless stations as second wireless stations. A control unit of the second wireless station, upon receiving the registration start message, sets the second wireless station including this control unit as a slave, and transmits a response message including an identification code of the second wireless station, through a wireless transmission and reception unit to the first wireless station. The control unit of the first wireless station, upon receiving the response message, stores the identification codes of all of the second wireless stations that have replied.

### Summary of Invention

Incidentally, it is known that a setting between a master device and a slave device relating to an alarm system is made by registering pieces of information to be set in the master device and the slave device respectively on the master device and the slave device, and then, sharing and setting the pieces of information between and in the master device and the slave device. In the known alarm system, a user gives operations so as to register respective pieces of installation location information with all of the master device and the slave device, and thereafter, the pieces of installation location information thus registered are exchanged between the master device and the slave device to make a setting of the alarm system. That is, the known alarm system stores necessary pieces of information in the master device and the slave device, and then, the pieces of information are exchanged between the master device and the slave device to complete the setting, and therefore, the setting of the alarm system requires an increased time and a significant amount of effort.

In view of the foregoing, it is an object of the present disclosure to provide an alarm system, a setting method, and a program configured to more efficiently perform a setting process for interconnected operation between the master device and the slave device than before. The invention is defined in the appended claims.

An alarm system according to one aspect of the present disclosure is an alarm system in which a plurality of alarms including a first apparatus which is a master device and a second apparatu which is a slave device cooperate with each other to achieve alarming in an interconnected manner between the plurality of alarms. The first apparatus includes: a first controller configured to execute a setting process of making a setting for interconnected operation between the first apparatus and the second apparatus; and a first storage configured to store a master device identification code identifying the first apparatus. The second apparatus includes: a second controller configured to execute the setting process between the second apparatus and the first apparatus; and a second storage configured to store a plurality of master device identification codes representing types of various alarms expected to be applied to the first apparatus and to store individual setting information associated to each of the master device identification codes, wherein the individual setting information is information regarding a setting of the second apparatus. The first controller is configured to transmit the master device identification code to the second apparatus in the setting process. The second controller is configured to: when the second controller receives the master device identification code, select the individual setting information corresponding to the master device identification code which the second controller is to set; and to, based on the individual setting information thus selected, make a setting of the second apparatus in the setting process.

An alarm according to one aspect of the present disclosure is an alarm which is used as the second apparatus included in the alarm system. The alarm has a data table in which the individual setting information is stored in association with the identification code.

A setting method according to one aspect of the present disclosure is a setting method used in an alarm system in which a plurality of alarms including a first apparatus which is a master device and a second apparatus which is a slave device cooperate with each other to achieve alarming in an interconnected manner between the plurality of alarms. The first apparatus includes: a first controller configured to execute a setting process of making a setting for interconnected operation between the first apparatus and the second apparatus; and a first storage configured to store a master dervice identification code identifying the first apparatus. The second apparatus includes: a second controller configured to execute the setting process between the second apparatus and the first apparatus; and a second storage configured to store a plurality of master device identification codes representing types of various alarms expected to be applied to the first apparatus and to store individual setting information associated to each of master device identification codes, wherein the individual setting information is information regarding a setting of the second apparatus. The setting method includes a transmission step and a setting step. The transmission step includes transmitting the master device identification code from the first controller to the second apparatus. The setting step includes: when the second controller receives the master device identification code, selecting, by the second controller, the individual setting information corresponding to the master device identification code which the second controller is to set; and making, based on the individual setting information thus selected, a setting of the second apparatus by the second controller.

A program according to one aspect of the present disclosure is a program configured to cause a computer to execute the setting method.

### Brief Description of Drawings

FIG. 1 is a schematic diagram illustrating an alarm system according to a first embodiment;
FIG. 2 is a block diagram illustrating a master device and slave devices according to the first embodiment;
FIG. 3 is a view illustrating data tables of pieces of individual setting information included in the slave devices according to the first embodiment;
FIG. 4 is a time chart illustrating a setting process performed between the master device and each of the slave devices in the alarm system according to a first embodiment;
FIG. 5 is a view illustrating a variation of the time chart illustrating a setting process performed between the master device and each of the slave devices in the alarm system according to a first embodiment;
FIG. 6 is a block diagram illustrating a master device and a slave device according to a second embodiment;
FIG. 7 is a view illustrating an alarm system disposed in a building having a multi-story structure according to the second embodiment;
FIG. 8 is a block diagram illustrating a master device and a slave device according to a third embodiment; and
FIG. 9 is a view illustrating an alarm system disposed in a building having a multi-story structure according to the third embodiment.

### Description of Embodiments

With reference to the drawings, alarm systems 1 to 3 respectively according to a first embodiment, a second embodiment, and a third embodiment of the present disclosure will be described in detail below.

First of all, a basic concept of each embodiment is described, and then, a specific content of each embodiment is described. However, the embodiments described below provide comprehensive or specific examples. Numerical values, components, disposition locations and connection configurations of the components, the orders of steps, and the like described in the following embodiments are mere examples and are not intended to limit the present disclosure. Moreover, of the components in the following embodiments, components which are not recited in the independent claim representing the most significant concept will be described as optional components.

Note that each drawing is a schematic diagram and is not necessarily precise. Moreover, in each drawing, substantially the same components are denoted by the same reference signs, and redundant description thereof may be omitted or simplified.

### <Basic Concept of Each Embodiment>

First of all, a basic concept common to the embodiments will be described. Each of the alarm systems 1 to 3 according to the respective embodiments is a system in which a plurality of alarms respectively including a first apparatus(es) 10, 30, and 50 (hereinafter respectively referred to as a master device(s) 10, 30, and 50) and second apparatuses 20, 40, and 60 (hereinafter respectively referred to as slave devices 20, 40, and 60) cooperate with each other to achieve alarming in an interconnected manner between the alarms when an abnormality is present.

The alarm systems 1 to 3 according to the respective embodiments detect the occurrence of an event that calls for disaster prevention measures. In this embodiment, the event that calls for disaster prevention measures is supposed to be a fire. However, the event that calls for disaster prevention measures is not limited to a fire but may be gas leakage, generation of carbon monoxide, or the like.

As described above, each of the alarm systems 1 to 3 is a system configured to detect and report a fire and is thus expected to be applied to a building A1 such as a detached dwelling house or a multiple dwelling house. However, the building A1 is not limited to the dwelling house but may include non-dwelling houses such as office buildings, theaters, movie theaters, recreation halls, restaurants, department stores, schools, hotels, and stations.

Moreover, the master device(s) 10, 30, and 50 and the slave devices 20, 40, and 60 respectively in the alarm systems 1 to 3 may arbitrarily select alarms to be applied. Any communication means may be used between each of the master device(s) 10, 30, and 50 and each of the slave devices 20, 40, and 60, and for example, wireless, wired, or optical communication may be used.

An object of the alarm systems 1 to 3 according to the respective embodiments is to simplify setting work for causing the master device(s) 10, 30, and 50 and the slave devices 20, 40, and 60 to function, and a feature of the alarm systems 1 to 3 of the respective embodiments is that each of the slave devices 20, 40, and 60 performs its own setting by itself in accordance with the type of the master device(s) 10, 30, and 50 with which the slave devices 20, 40, and 60 are associated. Schematically speaking, the feature is that each of the slave devices 20, 40, and 60 has a data table 76 of pieces of individual setting information 70 regarding its own setting in accordance with the type of the master device(s) 10, 30, and 50, identifies the type of the master device(s) 10, 30, and 50 based on a master device identification code 74 transmitted from the master device(s) 10, 30, and 50, and can select a piece of the pieces of individual setting information 70 according to the type of the master device(s) 10, 30, and 50 from the data table 76. A further feature is that the slave devices 20, 40, and 60 make settings of the slave devices 20, 40, and 60 respectively based on the pieces of individual setting information 70 thus selected.

This minimizes an operation given to the alarms belonging to the alarm systems 1 to 3 to complete the settings of the alarms, which can omit a time and effort required for work.

Next, specific contents of each embodiment will be described.

### (First Embodiment)

### <Schema>

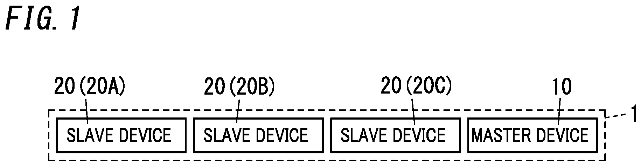

The alarm system 1 of the first embodiment will be described with reference to FIGS. 1 to 7. Note that any alarm may be used as the master device 10 and the slave devices 20 in each embodiment as described above, but in the present embodiment, an example is described in which the master device 10 and the slave devices 20 are applied to a wireless detector for residential use (hereinafter referred to as a detector).

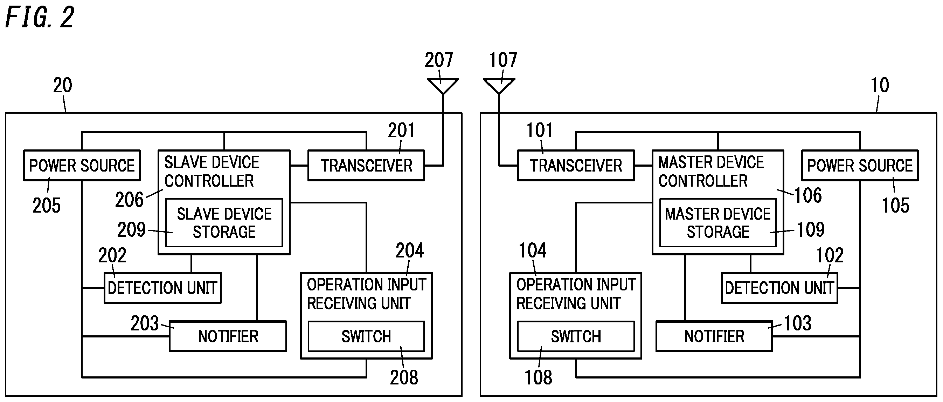

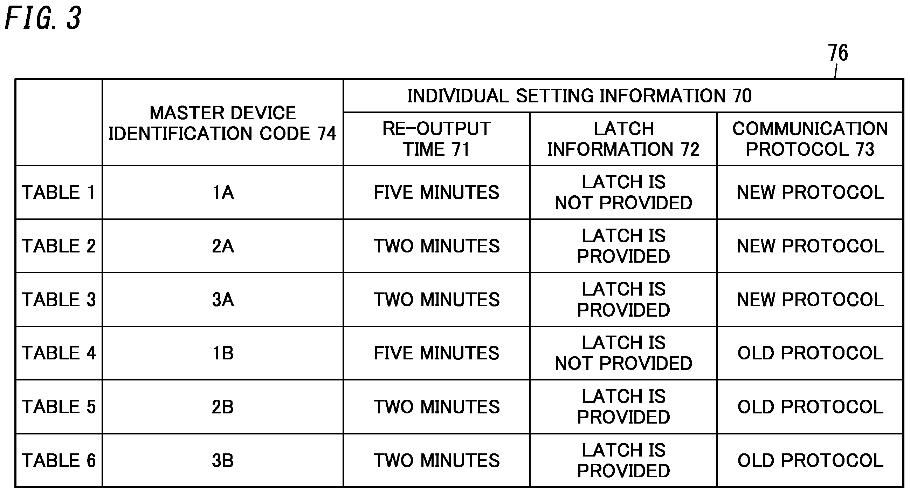

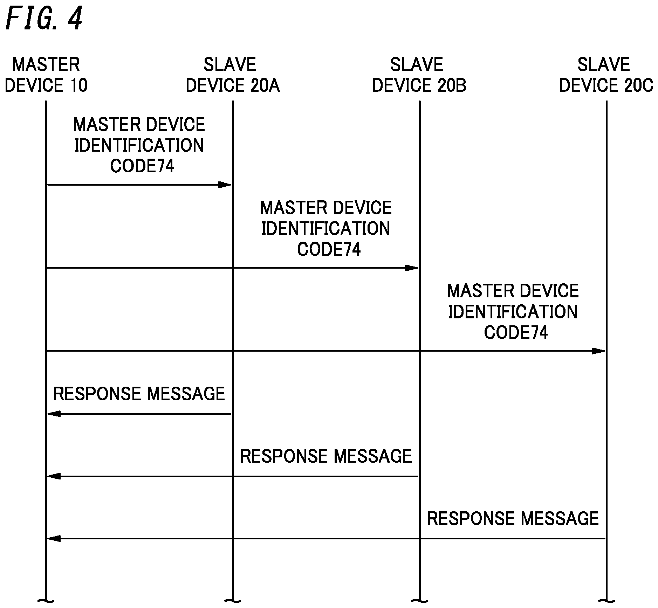

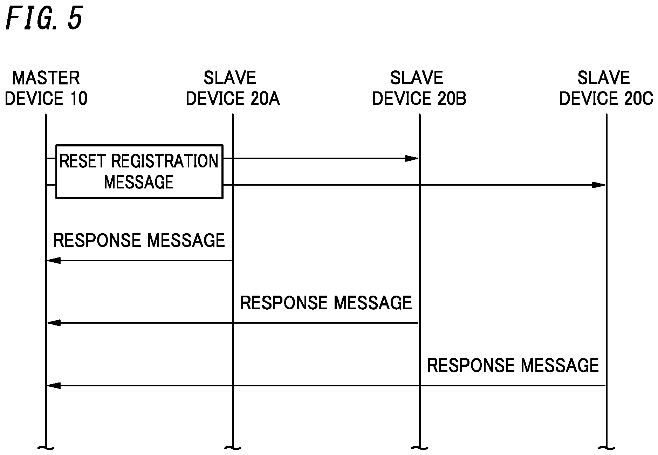

FIG. 1 is a view schematically illustrating the alarm system 1. FIG. 2 is a block diagram illustrating the master device 10 and the slave devices 20. FIG. 3 is a view illustrating the data table 76 of the pieces of individual setting information 70 which the slave devices 20 have. FIG. 4 is a time chart illustrating a setting process to be performed between the master device 10 and each of the slave devices 20 in the alarm system 1. FIG. 5 is view illustrating a variation of the time chart illustrating the setting process to be performed between the master device 10 and each of the slave devices 20 in the alarm system 1.

As shown in FIG. 1, the alarm system 1 of the present embodiment includes one master device 10 and three slave devices 20 (20A, 20B, and 20C). For description of matters common to the slave devices 20, the slave devices are denoted by the slave devices 20, and for description of the plurality of lave devices 20, the slave devices are denoted by the slave device 20A, the slave device 20B, and the slave device 20C. However, the number of slave devices 20 is not limited to three.

### <Description of Configuration of Master Device 10>

First of all, a configuration of the master device 10 will be described. As illustrated in FIG. 2, the master device 10 includes a transceiver 101, a detection unit 102, a notifier 103, an operation input receiving unit 104, a power source 105, and a first controller 106 configured to execute various kinds of control (hereinafter referred to as a master device controller 106).

The transceiver 101 is compliant with the "radio station of low power security system" specified in the enforcement regulation of the Japanese Radio Act Section 6(4)(iii), is configured to transmit and receive a radio signal using a radio wave as a medium via an antenna 107 included in the master device 10, includes, for example, a commercially available low power consumption LSI for wireless communication, and the like, and outputs a received signal strength indication (RSSI signal) which is a direct current voltage signal proportional to the magnitude of the received signal strength.

The detection unit 102 detects, for example, smoke, thereby outputting a fire detection signal to the master device controller 106. The detection unit 102 includes a light-emitting unit (not shown) such as a light-emitting diode (LED) and a light-receiving unit (not shown) such as a photodiode, for example. The light-emitting unit and the light-receiving unit are arranged in a labyrinth of a housing of the master device 10 such that a light-receiving plane of the light-receiving unit is off an optical axis of light emitted from the light-emitting unit. In the presence of a fire, smoke may flow into the labyrinth through holes provided through the housing.

If there is no smoke in the labyrinth of the housing, then the light emitted from the light-emitting unit hardly reaches the light-receiving plane of the light receiving unit. On the other hand, if there is any smoke in the labyrinth of the housing, then the light emitted from the light-emitting unit is scattered by the smoke, thus causing some of the scattered light to impinge on the light-receiving plane of the light receiving unit. That is to say, the detection unit 102 makes the light receiving unit receive the light emitted from the light-emitting unit which has been scattered by the smoke. The detection unit 102 outputs an electrical signal (fire detection signal), representing a voltage level corresponding to the quantity of light received at the light-receiving unit, to the master device controller 106. However, the detection unit 102 is not limited to the photoelectric sensor but may be, for example, an isothermal sensor which senses heat or flame.

The notifier 103 informs a user of the presence of a fire by outputting, from a loudspeaker, a fire warning in the form of a sound such as a buzzer sound or a voice message (hereinafter referred to as an "alarm sound"). The notifier 103 outputs an alarm sound in accordance with control by the master device controller 106 when the detection unit 102 of the master device 10 detects an abnormality or when the detection unit 102 of the master device 10 receives the fire detection signal transmitted from any slave device 20 of the plurality of slave devices 20. At this time, location information on the installation location of the master device 10 or the slave device 20 which has detected the fire is preferably included into the voice message, which is output.

The operation input receiving unit 104 includes, for example, a switch 108 such as a push button or a dip switch. When an operation is given to the switch 108, the operation input receiving unit 104 receives an operation input corresponding to the switch 108 and outputs, to the master device controller 106, an operation signal corresponding to the operation input. In the present embodiment, the operation input receiving unit 104 is provided with a role of, when receiving a prescribed operation input, outputting an operation signal which causes the master device controller 106 to execute a setting process described later.

Note that the switch 108 relates to the setting process, and in addition, may also relate to a warning stop process for stopping an output of the alarm sound from the notifier 103, an inspection process of inspecting the apparatus, and the like. Thus, receiving a plurality of operation inputs by a single switch 108 can reduce the number of switches in the operation input receiving unit 104. Switches 108 may be separately provided according to the roles, namely, for the setting process, for stopping the warning, and the like.

The power source 105 includes a battery, such as a dry battery, as a power supply and supplies operation power to each component.

The master device controller 106 performs various kinds of control to perform, for example, control relating to: the execution of the setting process for operation of the master device 10 and the slave devices 20 in an interconnected manner; and alarming in an interconnected manner, which will be described later. Moreover, when receiving a fire detection signal from the detection unit 102, the master device controller 106 controls the notifier 103 such that the notifier 103 outputs an alarm sound, and the master device controller 106 controls the transceiver 101 such that the transceiver 101 transmits a radio signal including the fire detection signal to the slave devices 20 which are the other detectors. Moreover, when the transceiver 101 receives a fire detection signal provided by wireless communication from the slave device 20 at a location where a fire is present, and the transceiver 101 inputs the fire detection signal to the master device controller 106, the master device controller 106 controls the notifier 103 such that the notifier 103 outputs the alarm sound, and the master device controller 106 controls the transceiver 101 such that the transceiver 101 transmits the fire detection signal to the slave devices 20 which are at locations except for the location where the fire is present.

Note that to the master device 10, a unique first identification code 74 (hereinafter referred to as the master device identification code 74) is assigned during manufacturing or the like and is stored in a master device storage 109. The master device identification code 74 enables each slave device 20 to identify the master device 10 as a destination of the radio signal and a transmission source of the fire detection signal and the like. The master device identification code is the IP address, Mac address, name, or the like of the master device 10.

The first storage 109 (hereinafter referred to as a master device storage 109) stores a control program and the like to be executed by the master device controller 106. Note that the control program may be implemented by causing a processor such as a Central Processing Unit (CPU) and the like to execute the program, that is, by software, may be implemented by hardware such as an Integrated Circuit (IC), or may be implemented by using the software and the hardware in combination.

In this embodiment, the control program may be recorded as a file in installable format or executable format in a computer readable recording medium such as a CD-ROM, a flexible disk (FD), a CD-R, or a Digital Versatile Disk (DVD).

Alternatively, the control program may be stored on a computer connected to a network such as the Internet and may be provided by being downloaded over the network or may be provided or distributed via a network such as the Internet.

Moreover, the master device storage 109 stores the master device identification code 74 described above. Moreover, the master device storage 109 receives a slave device identification code 75 from each slave device 20 and then stores the slave device identification code 75.

### <Description of Configuration of Slave Device 20>

Next, the configuration of each slave device 20 will be described. As illustrated in FIG. 2, the slave device 20, in a similar manner to the master device 10, includes a transceiver 201, a detection unit 202, a notifier 203, an operation input receiving unit 204, a power source 205, and a second controller 206 configured to execute various kinds of control (hereinafter referred to as a slave device controller 206).

The transceiver 201 is compliant with the "radio station of low power security system" specified in the enforcement regulation of the Japanese Radio Act Section 6(4)(iii) and is configured to transmit and receive a radio signal using a radio wave as a medium via an antenna 207 included in the master device 10. The transceiver 201 includes, for example, a commercially available low power consumption LSI for wireless communication and outputs a received signal strength indication (RSSI signal) which is a direct current voltage signal proportional to the magnitude of the received signal strength.

The detection unit 202 detects, for example, smoke, thereby outputting a fire detection signal to the slave device controller 206. The detection unit 202 includes a light-emitting unit (not shown) such as an LED and a light-receiving unit (not shown) such as a photodiode, for example. The light-emitting unit and the light-receiving unit are arranged in a labyrinth of a housing of the slave device 20 such that a light-receiving plane of the light-receiving unit is off an optical axis of light emitted from the light-emitting unit. In the presence of a fire, smoke may flow into the labyrinth through holes provided through the housing.

If there is no smoke in the labyrinth of the housing, then the light emitted from the light-emitting unit hardly reaches the light-receiving plane of the light receiving unit. On the other hand, if there is any smoke in the labyrinth of the housing, then the light emitted from the light-emitting unit is scattered by the smoke, thus causing some of the scattered light to impinge on the light-receiving plane of the light receiving unit. That is to say, the detection unit 202 makes the light receiving unit receive the light emitted from the light-emitting unit which has been scattered by the smoke. The detection unit 202 outputs an electrical signal (fire detection signal), representing a voltage level corresponding to the quantity of light received at the light-receiving unit, to the slave device controller 206. However, the detection unit 202 is not limited to the photoelectric sensor but may be, for example, an isothermal sensor which senses heat or flame.

The notifier 203 informs a user of the presence of a fire by outputting an alarm sound from a loudspeaker. The notifier 203 outputs the alarm sound in accordance with control by the slave device controller 206 when the detection unit 202 of the slave device 20 detects an abnormality or receives the fire detection signal transmitted from another slave device 20 or the master device 10. At this time, location information on the installation location of the master device 10 or the slave device 20 which has detected the fire is preferably included into the voice message, which is output.

The operation input receiving unit 204 includes, for example, a switch 208 such as a push button or a dip switch. When an operation is given to the switch 208, the operation input receiving unit 204 receives an operation input corresponding to the switch 208 and outputs, to the slave device controller 206, an operation signal corresponding to the operation input. In the present embodiment, the operation input receiving unit 204 is provided with a role of outputting, when receiving a prescribed operation input, an operation signal which causes the slave device controller 206 to execute a setting process described later.

Note that the switch 208 executes the setting process, and in addition, may also relate to a warning stop process for stopping an output of the alarm sound from the notifier 203, an inspection process of inspecting the apparatus, and the like. Thus, receiving a plurality of operation inputs by a single switch 208 can reduce the number of switches in the operation input receiving unit 204. Switches 208 may be separately provided according to the purposes, namely, for setting, for stopping the warning, and the like.

The power source 205 includes a battery, such as a dry battery, as a power supply and supplies operation power to each component.

The slave device controller 206 performs various kinds of control to perform, for example, control relating to: the execution of the setting process for operation of the master device 10 and the slave devices 20 in an interconnected manner; and alarming in an interconnected manner, which will be described later. Moreover, when receiving a fire detection signal from the detection unit 202, the slave device controller 206 controls the notifier 203 such that the notifier 203 outputs an alarm sound, and the slave device controller 206 controls the transceiver 201 such that the transceiver 201 transmits a radio signal including the fire detection signal for notification of the presence of the fire to the master device 10. Moreover, when receiving a fire detection signal provided by wireless communication from the master device 10, the slave device controller 206 controls the notifier 203 such that the notifier 203 outputs an alarm sound. Note that to each slave device 20, the slave device identification code 75 is assigned during manufacturing or the like, and the slave device identification code 75 enables the master device 10 to identify the slave device 20 as a destination of the radio signal and a transmission source of the fire detection signal and the like. The slave device identification code is the IP address, Mac address, name, or the like of the slave device 20.

The second storage 209 (hereinafter referred to as a slave device storage 209) stores a control program and the like to be executed by the slave device controller 206. Note that the control program may be implemented by causing a processor such as a CPU and the like to execute the program, that is, by software, may be implemented by hardware such as an IC, or may be implemented by using the software and the hardware in combination.

In this embodiment, the control program may be recorded as a file in installable format or executable format in a computer readable recording medium such as a CD-ROM, a FD, a CD-R, a DVD.

Alternatively, the control program may be stored on a computer connected to a network such as the Internet and may be provided by being downloaded over the network or may be provided or distributed via a network such as the Internet.

Moreover, the slave device storage 209 stores: the slave device identification code 75 described above; and the data table 76 in which the master device identification code 74 representing the types of an alarm applied to the master device 10 as illustrated in FIG. 3 are associated with the individual setting information 70 which is information regarding settings of the slave devices 20. However, the format to be stored is not limited to the data table. Moreover, the slave device storage 209 receives the master device identification code 74 from the master device 10 and then stores the master device identification code 74.

First of all, the individual setting information 70 includes, as illustrated in FIG. 3, a re-output time 71 of the slave device 20, information 72 (hereinafter referred to as latch information 72) regarding whether or not a latch is provided to the slave device 20, and communication protocol information 73 (hereinafter referred to as a communication protocol 73) between the master device 10 and the slave device 20. Note that the individual setting information 70 stored in the slave device storage 209 does not have to include all of the re-output time 71, the latch information 72, and the communication protocol 73 and is only required to include at least one piece of information. Moreover, the individual setting information 70 is not limited to a set of the re-output time 71, the latch information 72, and the communication protocol 73 but may include installation floor information and the like.

The re-output time 71 includes times each of which is the amount of time from when the slave device 20 stop outputting the alarm sound to when the slave device 20 restarts outputting the alarm sound. The re-output time may be set, for example, within the range from 2 minutes to 15 minutes, and the master device storage 109 stores pieces of time information such as "2 minutes", "3 minutes", and the like. The re-output time can be accordingly changed depending on an area of the facility in which the alarm system 1 is to be installed, a security zone, and/or application of the building.

The latch information 72 includes pieces of information each regarding whether or not a latch is provided to the slave device 20. In the case where the latch is provided, the slave device 20 continues outputting an alarm sound even when the master device 10 or another slave device 20 which has detected an abnormality stops outputting the alarm sound and then the slave device 20 receives a restoration signal transmitted from the alarm which has stopped, or even when the slave device 20 no longer receives the fire detection signal transmitted from the master device 10 or the another slave device 20 which has detected the abnormality. In the case where the latch is not provided, the slave device 20 stops outputting an alarm sound when the master device 10 or another slave device 20 which has detected an abnormality stops outputting an alarm sound and then the slave device 20 receives a restoration signal transmitted from the alarm which has stopped, or when the slave device 20 no longer receives the fire detection signal transmitted from the master device 10 or the another slave device 20 which has detected an abnormality. That is, in the case where the latch is provided, the slave device 20 continues outputting an alarm sound regardless of the operation or the communication state of a detection source of the abnormality, whereas in the case where the latch is not provided, the slave device 20 stops outputting the alarm sound in accordance with the operation or the communication state of the detection source of the abnormality. The slave device storage 209 stores "latch is provided" or "latch is not provided".

The communication protocol 73 includes pieces of information each regarding the communication protocol between the master device 10 and the slave device 20. The present embodiment adopts a method of adapting the slave device 20 to the communication protocol of the master device 10. Thus, the slave device storage 209 stores, for example, communication protocols, such as a "new protocol" and an "old protocol", corresponding to the master device 10.

The slave device storage 209 stores information in such a state where the individual setting information 70 including "5 minutes" as the re-output time 71, "latch is not provided" as the latch information 72, and "new protocol" as the communication protocol 73 are associated with "1A" as the master device identification code 74 representing a specific type applied to the master device 10.

Moreover, the slave device storage 209 stores a plurality of master device identification codes representing types of various alarms expected to be applied to the master device and stores the individual setting information 70 associated to each master device identification code 74 in the data table 76. The combination of the re-output time 71, the latch information 72, and the communication protocol 73 stored in the data table 76 is different for each master device identification code 74 representing the type applied to the master device 10, and the present embodiment includes six tables (table 1 to table 6). Naturally, pieces of individual setting information 70 having same contents may be associated with different master device identification codes 74.

The slave device controller 206 of the slave device 20 selects, from the data table 76 which the slave device storage 209 has, the individual setting information 70 corresponding to the master device identification code 74 of the master device 10 to which the slave device 20 is associated, and the slave device controller 206 makes a setting of the slave device 20, which will be described later in detail. This can make the setting efficient.

If the slave device 20 receives "1A" as the master device identification code from the master device 10, the slave device 20 selects, from the data table 76 shown in FIG. 3, table 1 in which the master device identification code is "1A". Then, the slave device 20 sets, based on the individual setting information 70 in table 1, "5 minutes" as the re-output time, "absent" as the latch information, and "new protocol" as the communication protocol in the slave device 20 itself. Note that the combination of the re-output time 71, the latch information 72, and the communication protocol 73 shown in FIG. 3 is an example, and the number of tables stored in the data table 76 may be increased or reduced.

### <Description of Setting Process>

A setting process of the slave device 20 in the present embodiment will be described below with reference to FIG. 4. The setting process corresponds to a setting relating to operation of the master device 10 and the slave devices 20 in an interconnected manner and includes an interconnect setting process and an individual setting process. The interconnect setting process includes transmitting the master device identification code 74 of the master device 10 to the slave devices 20 such that the slave devices 20 and the master device 10 operate in an interconnected manner. The individual setting process includes recognizing, based on the master device identification code 74 transmitted from the master device 10 to the slave devices 20, the master device 10 to which the slave devices 20 correspond and setting, in the slave devices 20, the individual setting information 70 by the slave devices 20, the individual setting information 70 corresponding to the master device 10 thus recognized.

Note that in the interconnect setting process, the master device 10 transmits the master device identification code 74 to the slave devices 20, and each slave devices 20 transmits the slave device identification code 75 to the master device 10. The interconnect setting process is completed when the master device 10 stores the slave device identification code 97 received from each slave device 20, and each slave device 20 stores the master device identification code 96 received from the master device 10. Moreover, the individual setting process is completed at a time point at which the master device 10 sends the master device identification code 74 to the slave devices 20, and each slave device 20 completes the setting based on an individual identification code 74 corresponding to the master device identification code 74.

In the setting process, the interconnect setting process and the individual setting process may be substantially simultaneously performed. Alternatively, the alarm system 1 may perform the individual setting process after completion of the interconnect setting process. Note that the method of the setting process is not limited to these methods.

The setting process will be described below with reference to FIG. 4.

When the operation input receiving unit 104 of the master device 10 receives an operation given to the switch 108, the master device controller 106 of the master device 10 transitions to a setting registration mode of setting the slave devices 20 (20A to 20C). Moreover, when the operation input receiving units 204 of the slave devices 20 (20A to 20C) receive operations given to the switches 208, the slave device controllers 206 of the slave devices 20 (20A to 20C) transition to a setting reception mode of setting the slave devices 20 (20A to 20C) itself.

When the master device 10 transitions to the setting registration mode and the slave devices 20 (20A to 20C) transition to the setting reception mode, the master device controller 106 of the master device 10 controls the transceiver 101 such that the transceiver 101 transmits the master device identification code 74 to the slave devices 20 (20A to 20C).

Subsequently, when the slave device controllers 206 of the slave devices 20 (20A to 20C) in the setting reception mode receive the master device identification code 74, the slave device controllers 206 recognize and store the master device identification code 74 and select, from the data table 76 stored in the slave device storages 209, tables of the tables 1 to 6 to which the master device identification code 74 corresponds. Then, the slave device controllers 206 make settings of the slave devices 20 (20A to 20C) based on the individual setting information 70 included in the tables thus selected.

Thereafter, the slave devices 20 (20A to 20C) transmit reply messages from the transceivers 201 to the master device 10. Each reply message represents reception of the master device identification code 74 and completion of the setting. In this embodiment, the reply messages include the slave device identification codes 75 of the slave devices 20 (20A to 20C).

Note that the reception of the master device identification code 74 and the completion of the setting of the reply message may be transmitted as separate reply messages to the master device 10. In this case, each slave device 20 may transmit a reply message meaning reception completion to the master device 10 at a time point at which the slave device 20 receives and stores the master device identification code 74 from the master device 10. Subsequently, each slave device 20 may transmit a reply message meaning setting completion to the master device 10 at a time point at which the setting of the slave device 20 is completed based on the individual setting information 70 which matches with the master device identification code 74. Naturally, the reply messages may include the respective slave device identification codes 75 of the slave devices 20 (20A to 20C).

After transmission of the reply messages, the slave devices 20 (20A to 20C) end the setting registration mode. Moreover, after reception of the reply messages from the slave devices 20 (20A to 20C), the master device 10 stores the slave device identification codes 75 and ends the setting registration mode. At this time point, the interconnect setting process and the individual setting process are completed.

The foregoing is a basic flow of the setting process which the master device 10 performs on the slave device 20. In the setting process, the slave devices 20 (20A to 20C) recognize the master device identification code 74 thus received, and thereby, each of the slave devices 20 (20A to 20C) can select the individual setting information 70 corresponding to the master device identification code 74 thus received. In this way, the slave devices 20 (20A to 20C) can complete the settings of themselves.

Alternatively, another method includes performing the individual setting process after the interconnect setting process is performed. In the another method, after the master device 10 transitions to the setting registration mode and the slave devices 20 (20A to 20C) transition to the setting reception mode, the master device 10 at first transmits the master device identification code 74 to the slave devices 20, thereby performing the interconnect setting process of causing the slave devices 20 and the master device 10 to operate in an interconnected manner. That is, at this time point, the slave devices 20 transmit the slave device identification codes 75 to the master device 10. Thereafter, the master device 10 once again transmits the master device identification code 74 to the slave devices 20, and thereby, each slave device 20 selects, from the data table 76 stored in the slave device storage 209, a table with which the master device identification code 74 matches, and based on the individual setting information 70 included in the table thus selected, each slave device 20 performs the individual setting process of performing the setting of the slave device 20 itself.

Note that another method may be used as the method for causing the master device 10 to transition to the setting registration mode and causing the slave devices 20 to transition to the setting reception mode. In the method described above, operations are given to the switch 108 of the master device 10 and the switches 208 of the slave devices 20, thereby causing the transition to each mode, but alternatively available methods are, for example, a method in which within a prescribed time period (e.g., 5 minutes) after power supply to the master device 10 and the slave devices 20, the power supply triggers transition of the master device 10 to the setting registration mode and the power supply triggers transition of the slave devices 20 (20A to 20C) to the setting reception mode without any operation given to any of the switch 108 and the switches 208, and a method when any of the switch 108 and the switches 208 respectively of the master device 10 and the slave devices 20 to which power has been supplied is pressed, all of the master device 10 and the slave devices 20 to which the power has been supplied automatically transition to the setting registration mode or to the setting reception mode.

Moreover, for mutual recognition of the transition to the setting registration mode or the setting reception mode, the master device 10 may output, to the slave devices 20, a signal meaning that the master device 10 has transitioned to the setting registration mode, and each slave devices 20 may output, to the master device 10, a signal meaning that the slave device 20 has transitioned to the setting reception mode.

Thus, limiting a time period during which setting registration is possible can prevent erroneous setting registration of an alarm which does not belong to the alarm system 1 of the present embodiment. Note that the time period of the setting registration mode is not limited to the time period described above.

The above description assumes that the master device 10 performs the setting process described above on each of the slave devices 20A, 20B, and 20C. However, when the plurality of slave devices 20 have transitioned to and are in the setting reception mode, the process may be performed on the slave device 20B and then on the slave device 20C at a time point at which a process by the slave device 20A ends as shown in FIG. 4. In this case, the master device 10 may, at a time point at which the master device 10 receives a reply message notifying reception of the master device identification code 74 and completion of the setting by the slave device 20A, send the master device identification code 74 to another, for example, the slave device 20B to cause the slave device 20B to start the setting process. Moreover, the master device 10 may transmit the master device identification code 74 to the slave device 20B to start the setting process without waiting for the reply message from the slave device 20A.

Subsequently, a method will be described in which as illustrated in FIG. 5, the master device 10 multicasts the master device identification code 74 to the slave device 20A, the slave device 20B, and the slave device 20C. The method for causing the master device 10 to transition to the setting registration mode and causing the slave devices 20 to transition to the setting reception mode is as the above method, and the description thereof is omitted.

When the master device 10 transitions to the setting registration mode, and the slave device 20A, the slave device 20B, and the slave device 20C transition to the setting reception mode, the master device controller 106 of the master device 10 controls the transceiver 101 such that the transceiver 101 multicasts the master device identification code 74 to the slave device 20A, the slave device 20B, and the slave device 20C. Then, the slave device controllers 206 of the slave device 20A, the slave device 20B, and the slave device 20C in the setting reception mode recognize the master device identification code 74, perform the settings of the slave device 20A, the slave device 20B, and the slave device 20C respectively, control the transceivers 201 to receive the master device identification code 74, store the master device identification code 74, and unicasts, to the master device 10, reply messages notifying the completion of setting of the individual setting information. Also in this case, the reply messages includes the slave device identification codes 75 of the slave devices 20 (20A to 20C).

Also in this case, regarding the reply messages to be transmitted to the master device 10 after reception of the master device identification code 74, reception of the master device identification code 74 and storing of the master device identification code 74, and completion of setting of the individual setting information may be transmitted as separate reply messages to the master device 10. In this case, each slave device 20 may transmit a reply message meaning reception completion of the master device identification code 74 to the master device 10 at a time point at which the slave device 20 receives the master device identification code 74 from the master device 10 and stores the master device identification code 74, and subsequently, each slave device 20 may transmit a reply message meaning setting completion of the individual setting information 70 to the master device 10 at a time point at which the setting of the slave device 20 is completed based on the individual setting information 70. Naturally, either of the reply messages may include the slave device identification codes 75 of each of the slave devices 20 (20A to 20C).

The setting process can be shortened more by multicasting the master device identification code 74 from the master device 10 to the slave device 20A, the slave device 20B, and the slave device 20C than by sequentially transmitting the master device identification code 74 from master device 10 to the slave device 20A, to the slave device 20B, and then to the slave device 20C.

Incidentally, for example, the individual setting information 70 of the master device 10 or the master device 10 itself may be changed, and the pieces of individual setting information 70 set in the slave devices 20 (20A to 20C) may be modified (hereinafter referred to as a reset process). The reset process is performed by a similar method to the setting process. In the reset process, the master device controller 106 of the master device 10 transmits new master device identification code 74 to the slave devices 20 (20A to 20C) after the master device 10 transitions to the setting registration mode and the slave devices 20 (20A to 20C) transition to the setting reception mode. Then, the slave device controllers 206 of the slave devices 20 (20A to 20C) in the setting reception mode recognize the new master device identification code 74 and set the slave devices 20. The reset process may be performed after the settings of all the slave devices 20 (20A to 20C) are deleted or may be written over pieces of existing information which the slave devices 20 (20A to 20C) have. Moreover, when the system includes a plurality of slave devices 20, a new master device identification code 74 may be multicast to all of the slave device 20A, the slave device 20B, and the slave device 20C.

### <Effects, etc.>

As described above, in the present embodiment, the slave device controller 206 of each slave device 20 recognizes the master device identification code 74 received from the master device 10 and selects, from the data table 76 stored in the slave device storage 209, individual setting information 70 which is suitable. Then, the slave device controller 206 can make a setting of the slave device 20 based on the individual setting information 70. That is, each slave device 20 can identify the master device 10 based on the master device identification code 74 and can complete a setting suitable to the master device 10 by a process by itself. Thus, in the alarm system 1 according to the present embodiment, work required for the setting can be simplified and a time required for registration can be reduced as compared to the case where operations are given one-by-one to store pieces of information required for the setting in the master device 10 and the slave devices 20, and thereafter, the pieces of information thus stored are exchanged between the master device 10 and each of the slave devices 20 to perform the setting process.

### (Second Embodiment)

### <Schema>

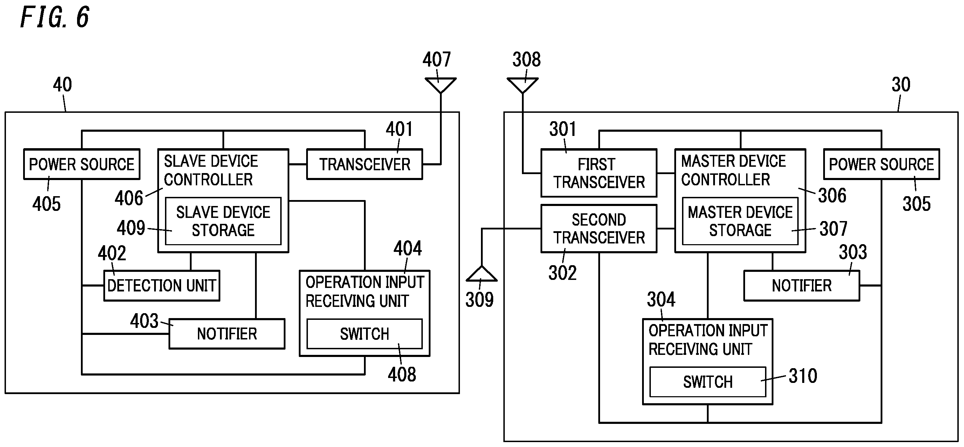

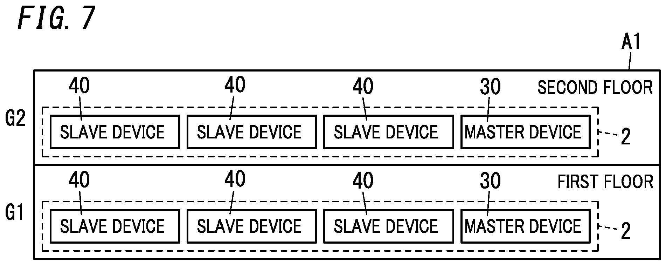

An alarm system 2 of a second embodiment will be described with reference to FIGS. 6 and 7. FIG. 6 is a block diagram illustrating a master device 30 and a slave device 40 according to the second embodiment. FIG. 7 is a view illustrating the alarm system 2 installed in a building A1 having a multi-story structure according to the second embodiment.

Note that any alarm may be used as the master device 30 and the slave devices 40 in each embodiment as described above, but in the present embodiment, an example is described in which master devices 30 are applied to relays and slave devices 40 are applied to wireless detectors for residential use (hereinafter referred to as detectors). As used herein, the relays are assumed to be apparatuses configured to wirelessly exchange signals between the same apparatuses. Since this embodiment is the same as the alarm system of the first embodiment except that the master devices 30 are the relays, the common description thereof is omitted. In this embodiment, the relays, for example, exchange signals between groups and enable a system configuration across floors which will be described later.

### <Description of Configuration of Master Device 30>

The configuration of each master device 30 which is the relay will be described. As shown in FIG. 6, the master device 30 includes a first transceiver 301, a second transceiver 302, a notifier 303, an operation input receiving unit 304, a power source 305, a first controller 306 (hereinafter referred to as a master device controller 306), and a first storage 307 (hereinafter referred to as a master device storage 307).

The first transceiver 301 transmits and receives, by using a channel frequency f corresponding to a group to which the master device 30 belongs, a radio signal such as a fire detection signal to and from the slave device(s) 40 belonging to the same group as the master device 30. The first transceiver 301 is compliant with, for example, STD-30 (standard of security radio equipment for low power radio station) known as a standard of a specified low power radio station in a 400-MHz band and transmits and receives a radio signal using a radio wave as a medium via a first antenna 308 included in the master device 30.

The second transceiver 302 transmits and receives a signal such as a fire detection signal to and from an adjacent master device 30 via a second antenna 309 included in the master device 30. In a similar manner to the first transceiver 301, second transceiver 302 transmits and receives a fire detection signal or the like, for example, in accordance with a communication protocol compliant with a standard of a specified low power radio station in a 400-MHz band.

The notifier 303 informs a user of the outbreak of a fire by outputting, from a loudspeaker, a fire warning in the form of a sound such as a buzzer sound or a voice message (hereinafter referred to as an "alarm sound"). The alarm sound of the present embodiment is output in accordance with control by the master device controller 306 when the master devices 30 receives a fire detection signal transmitted from the slave device 40. At this time, location information on the installation location of the slave device 40 which has detected the fire is preferably included into the voice message, which is output.

The operation input receiving unit 304 includes, for example, a switch 310 such as a push button or a dip switch. When an operation is given to the switch 310, the operation input receiving unit 304 receives an operation input corresponding to the switch 310 and outputs, to the master device controller 306, an operation signal corresponding to the operation input. In the present embodiment, the operation input receiving unit 304 is provided with a role of, when receiving a prescribed operation input, outputting an operation signal which causes the master device controller 306 to execute a setting process.

Note that the switch 310 executes the setting process, and in addition, can execute a warning stop process for stopping an output of the alarm sound from the notifier 303. That is, the switch 310 also has a role of stopping a warning, and giving an operation to the switch 310 can stop the alarm sound be stopped by. Switches 310 may be separately provided according to purposes, namely, for setting, for stopping the warning, and the like.

The power source 305 includes a battery, such as a dry battery, as a power supply and supplies operation power to each component.

When the master device controller 306 receives the fire detection signal from the slave device 40 belonging to the same group, the master device controller 306 transmits the fire detection signal to another adjacent master device 30 from the second transceiver 302 and controls the first transceiver 301 such that the fire detection signal is transmitted to the slave device(s) 40 in the same group at locations except for a location where a fire is present. When the master device controller 306 receives a fire detection signal from another master device 30, the master device controller 306 controls the notifier 303 such that an alarm sound is output, and the master device controller 306 controls the first transceiver 301 such that the fire detection signal is transmitted to the slave device(s) 40 belonging to the same group.

The master device storage 307 stores a control program and the like to be executed by the master device controller 306. Note that the control program may be implemented by causing a processor such as a CPU and the like to execute the program, that is, by software, may be implemented by hardware such as an IC, or may be implemented by using the software and the hardware in combination.

In this embodiment, the control program may be recorded as a file in installable format or executable format in a computer readable recording medium such as a CD-ROM, a FD, a CD-R, a DVD.

Alternatively, the control program may be stored on a computer connected to a network such as the Internet and may be provided by being downloaded over the network or may be provided or distributed via a network such as the Internet.

Moreover, the master device storage 307 stores a unique master device identification code 74. Moreover, the master device storage 307 receives a slave device identification code 75 from each slave device 40 and then stores the slave device identification code 75. Note that the master device identification code 74 is stored in the master device storage 307 during manufacturing or the like. The master device identification code 74 enables the slave device 40 to identify the master device 30 as a destination of the radio signal and a transmission source of the fire detection signal and the like. The master device identification code 74 is the IP address, Mac address, name, or the like of the master device 30.

### <Description of Configuration of Slave Device 40>

Subsequently, the configuration of each slave device 40 which is a detector will be described. As illustrated in FIG. 6, the slave device 40 includes a transceiver 401 configured to transmit and receive a radio signal by using a radio wave as a medium via an antenna 407, a detection unit 402 configured to detect, for example, smoke, a notifier 403 configured to inform a user of the presence of a fire by outputting an alarm sound, a switch 408, and an operation input receiving unit 404 configured to, when receiving a prescribed operation input, execute a setting process or a warning stop process, a power source 405 configured to supply operation power to each component, and a second controller 406 (referred to as a slave device controller 406) including a second storage 409 (referred to as a slave device storage 409) as a main component and configured to control each component. As described above, the slave device 40 has a similar configuration and similar functions to the slave device 20, and the detailed description of the components thereof is omitted.

### <Description of Setting Process>

The setting process includes an interconnect setting process and an individual setting process. The interconnect setting process includes transmitting the master device identification code 74 of the master device 30 to the slave devices 40 such that the slave devices 40 and the master device 30 operate in an interconnected manner. The individual setting process includes recognizing, based on the master device identification code 74 transmitted from the master device 30 to the slave devices 40, the master device 30 to which the slave devices 40 correspond and setting, in the slave devices 40, the individual setting information 70 by the slave devices 40, the individual setting information 70 corresponding to the master device 30 thus recognized. Note that the interconnect setting process is completed at a time point at which the master device 30 sends the master device identification code 74 to the slave devices 40, the slave devices 40 send the slave device identification codes 75 to the master device 10, and the master device identification code 74 of the master device 30 is stored in the slave devices 40 and the slave device identification codes 75 of the slave devices 40 are stored in the master device 30. Moreover, the individual setting process is completed at a time point at which the master device 30 transmits the individual setting information 70 to the slave devices 40, and the slave devices 40 complete settings in accordance with the individual setting information 70.

The setting process of the present embodiment is a process in which when an operation is given to the operation input receiving unit 304 of the master device 30, the master device controller 306 of the master device 30 transitions to a setting registration mode of setting the slave devices 40 and starts the setting process. A specific method is similar to the method of the setting process of the alarm system 1 according to the first embodiment, and the description thereof is omitted.

### <Description of System Configuration across Floors>

One group of a system including one master device 30 and a plurality of slave devices 40 described above is used, for example, in a system configuration shown in FIG. 7. The alarm system 2 is installed in, for example, a two-story building A1, and one master device 30 which functions as a relay and three slave devices 40 (40A, 40B, and 40C) which function as detectors are installed in each of areas.

In this embodiment, one master device 30 and three slave devices 40 installed on each of a first floor and a second floor form a group. The one master device 30 and the three slave devices 40 installed on the first floor form group 1 (G1), and the one master device 30 and the three slave devices 40 installed on the second floor form group 2 (G2). To the groups G1 and G2, different channel frequencies f (f1 and f2) are assigned. An alarm belonging to each of the groups G1 and G2 transmits and receives a signal by using the channel frequency f assigned to a corresponding one of the groups to which the alarm belongs. Each of the slave devices 40 installed in the groups G1 and G2 is configured to, when detecting a fire, output an alarm sound and transmit a fire detection signal to the master device 30 belonging to the group to which a corresponding one of the slave devices 40 belongs.

Moreover, the master device 30, which is the relay, is wirelessly communicatively connected to an adjacent master device 30. That is, the master device 30 serves as a relay between the groups set for respective stories. For example, when a fire breaks out on the first floor, and any one of the slave devices 40 installed in the group G1 detects the fire, the slave device 40 which has detected the fire transmits a fire detection signal to the master device 30 by using the channel frequency f1, and when the master device 30 receives the fire detection signal, the master device 30 itself outputs an alarm sound and transmits the fire detection signal to the master device 30 in the group G2 adjacent thereto. After the master device 30 in the group G2 receives the fire detection signal, the master device 30 itself outputs an alarm sound and transmits the fire detection signal to the slave devices 40 installed in the group G2 by using the channel frequency f2. The slave devices 40 which has received the fire detection signal output alarm sounds.

Thus, even in the case where the slave device 40 belonging to any group of the plurality of groups detects a fire, a warning is output from the slave device 40 in another floor (of another group) in an interconnected manner via the master device 30, and therefore, it becomes possible to reliably inform a user in the building A1 of the outbreak of the fire and to prompt the user to take an appropriate action such as evacuation.

In the case of the system configuration across floors as illustrated in FIG. 7, the setting process is performed for each of the groups G1 and G2. That is, the individual setting information 70 stored in the master device 30 in each of the groups is transmitted to the slave devices 40 belonging to the same group, and thereby, the slave devices 40 store the individual setting information 70. Then, the slave device controllers 206 of the slave devices 40 makes settings of the slave devices 40 based on the pieces of individual setting information 70 transmitted from the master device 30 belonging to the group of the slave devices 40. At this time, the master devices 30 in the groups are assumed to store different pieces of individual setting information 70. However, this should not be construed as limiting, and all the master devices 30 may store the same individual setting information 70.

### <Effects, etc.>

In the present embodiment, the case where the master devices 30 are the relays has been described, but even when the master devices 30 are replaced with various products, a similar effect to that in the first embodiment can be obtained. That is, the individual setting information 70 stored in each master device 30 can be transmitted to the slave devices 40, and the slave devices 40 can make settings of the slave devices 40 based on the pieces of individual setting information 70. Thus, work required for the setting can be simplified and a time required for registration can be reduced as compared to the case where operations are given one-by-one to store pieces of information required for the setting in the master device 30 and the slave devices 40, and thereafter, the pieces of information thus stored are exchanged between the master device 30 and each of the slave devices 40 to perform the setting registration.

### (Third Embodiment)

### <Schema>

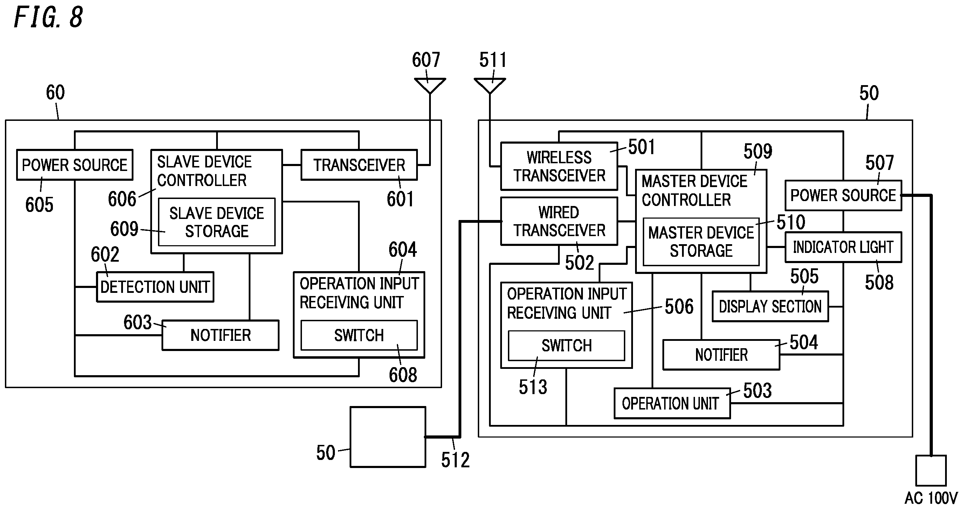

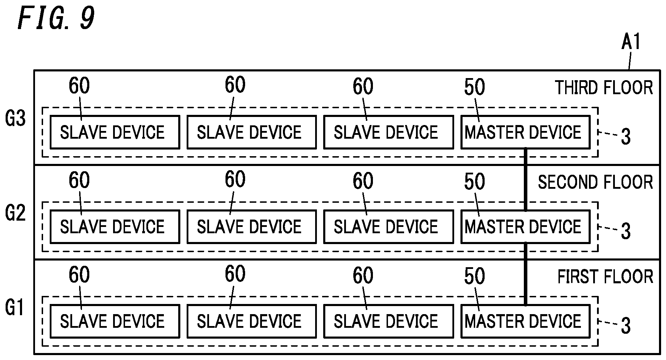

An alarm system 3 of a third embodiment will be described with reference to FIGS. 8 and 9. FIG. 8 is a block diagram illustrating a master device 50 and a slave device 60 according to the third embodiment. FIG. 9 is a view illustrating the alarm system 3 installed in a building having a multi-story structure according to the third embodiment.

Note that any alarm may be used as the master device 50 and the slave devices 60 in each embodiment as described above, but in the present embodiment, an example is described in which master devices 50 are applied to wired relays and slave devices 60 are applied to wireless detectors for residential use (hereinafter referred to as detectors). As used herein, the relays are assumed to be apparatuses configured to exchange signals between the same apparatuses via wires. Since this embodiment is the same as the alarm system of the first embodiment except that the master devices 50 are the wired relays, the common description thereof is omitted. In this embodiment, the wired relays, for example, exchange signals between groups and enable a system configuration across floors which will be described later.

### <Description of Configuration of Master Device 50>

The configuration of each master device 50 which is the wired relay will be described. As illustrated in FIG. 8, the master device 50 includes a wireless transceiver 501, a wired transceiver 502, an operation unit 503, a notifier 504, a display section 505, an operation input receiving unit 506, a power source 507, an indicator light 508, a first controller 509 (hereinafter referred to as a master device controller 509) configured to execute various kinds of control, and a first storage 510 (hereinafter referred to as a master device storage 510).

The wireless transceiver 501 transmits and receives, by using a channel frequency f corresponding to a group to which the master device 50 belongs, a radio signal such as a fire detection signal to and from the slave device(s) 60 belonging to the same group as the master device 50. The wireless transceiver 501 is compliant with, for example, STD-30 (standard of security radio equipment for low power radio station) known as a standard of a specified low power radio station in a 400-MHz band and transmits and receives a radio signal using a radio wave as a medium via an antenna 511 included in the master device 50.

The wired transceiver 502 transmits and receives a signal such as a fire detection signal to and from an adjacent master device 50 via a communication line 512 included in the master device 50.

The operation unit 503 is a push switch which receives, when an abnormality such as a fire is present in a building A1, a push operation given by a user who uses the building A1. The operation unit 503 receives the push operation, and thereby, the notifier 504 which will be described later outputs an alarm sound.

The notifier 504 informs a user of the outbreak of a fire by outputting, from a loudspeaker, a fire warning in the form of a sound such as a buzzer sound or a voice message (hereinafter referred to as an "alarm sound"). The alarm sound of the present embodiment is output in accordance with control by the master device controller 509 when the operation unit 503 receives the push operation or the master device 50 receives a fire detection signal transmitted from the slave device 60 at, for example, the outbreak of a fire. At this time, location information on the installation location of the alarm which has detected the fire is preferably included into the voice message, which is output.

The display section 505 is configured to display, for example, the presence of a fire. The display section 505 includes, for example, a liquid crystal display. When the operation unit 503 receives a push operation or the master device 50 receives the fire detection signal transmitted from the slave device 60 at, for example, the breakout of a fire, the display section 505 displays textual information for notifying the fire in accordance with control by the master device controller 509. The textual information may be, for example, "A fire is present" or may be information on the location such as "A fire is present on the first floor". Moreover, the display section 505 may display textual information such as "operation, normal" or "operation, abnormal" in accordance with results of operation inspection.

The operation input receiving unit 506 includes, for example, switches 513 such as a push button or a dip switch. When an operation is given to the switch 513, the operation input receiving unit 506 receives an operation input corresponding to each switch 513 and outputs, to the master device controller 509, an operation signal corresponding to the operation input. In the present embodiment, the operation input receiving unit 506 is provided with a switch 513 for setting, and the switch 513 is configured to, when receiving a prescribed operation input, output an operation signal which causes the master device controller 509 to execute a setting process. Note that the switches 513 include the switch 513 relating to the setting process, and in addition, a switch 513 relating to a warning stop process for stopping an output of the alarm sound from the notifier 504.

The power source 507 converts 100 V AC for commercial use into direct-current power and includes a battery as an auxiliary power supply as necessary.

The indicator light 508 includes, for example, LEDs and a dome-shaped cover covering the front of the LEDs. The cover has a light transmitting property. The indicator light 508 is kept ON to clearly show the location of the master device 50 even in the dark.

When the wireless transceiver 501 receives a fire detection signal provided from the slave device 60 by wireless communication, the master device controller 509 controls the notifier 504 such that an alarm sound is output, and controls the display section 505 such that the presence of a fire is displayed.

Moreover, when receiving the fire detection signal, the master device controller 509 causes the wired transceiver 502 to transmit the fire detection signal to another adjacent master device 50. When the master device controller 509 receives a fire detection signal from another master device 50, the master device controller 509 controls the notifier 504 such that an alarm sound is output, and controls the display section 505 such that the presence of a fire is displayed. Then, the master device controller 509 controls the wireless transceiver 501 such that the wireless transceiver 501 transmits the fire detection signal to the slave device 60 belonging to the same group.

The master device storage 510 stores a control program and the like to be executed by the master device controller 509. Note that the control program may be implemented by causing a processor such as a CPU and the like to execute the program, that is, by software, may be implemented by hardware such as an IC, or may be implemented by using the software and the hardware in combination.

In this embodiment, the control program may be recorded as a file in installable format or executable format in a computer readable recording medium such as a CD-ROM, a FD, a CD-R, a DVD.

Alternatively, the control program may be stored on a computer connected to a network such as the Internet and may be provided by being downloaded over the network or may be provided or distributed via a network such as the Internet.

Moreover, the master device storage 510 stores a master device identification code 74. Moreover, the master device storage 510 receives a slave device identification code 75 from each slave device 60 and then stores the slave device identification code 75. Note that the master device identification code 74 is stored in the master device storage 510 during manufacturing or the like. The master device identification code 74 enables each of the slave devices 60 to identify the master device 50 as a destination of the radio signal and a transmission source of the fire detection signal and the like. The master device identification code 74 is the IP address, Mac address, name, or the like of the master device 50.

### <Description of Configuration of Slave Device 60>

Subsequently, the configuration of each slave device 60 which is a detector will be described. As illustrated in FIG. 8, the slave device 60 includes a transceiver 601 configured to transmit and receive a radio signal by using a radio wave as a medium via an antenna 607, a detection unit 602 configured to detect, for example, smoke, a notifier 603 configured to inform a user of the presence of a fire by outputting an alarm sound, a switch 608, and an operation input receiving unit 604 configured to, when receiving a prescribed operation input, execute a setting process or a warning stop process, a power source 605 configured to supply operation power to each component, and a second controller 606 (referred to as a slave device controller 606) including a second storage 609 (referred to as a slave device storage 609) as a main component and configured to control each component. As described above, the slave device 60 has a similar configuration and similar functions to the slave device 20, and the detailed description of the components thereof is omitted.

### <Description of Setting Process>

The setting process includes an interconnect setting process and an individual setting process. The interconnect setting process includes transmitting the master device identification code 74 of the master device 50 to the slave devices 60 such that the slave devices 60 and the master device 50 operate in an interconnected manner. The individual setting process includes recognizing, based on the master device identification code 74 transmitted from the master device 50 to the slave devices 60, the master device 50 to which the slave devices 60 correspond and setting, in the slave devices 60, the individual setting information 70 by the slave devices 60, the individual setting information 70 corresponding to the master device 50 thus recognized. Note that the interconnect setting process is completed at a time point at which the master device 50 sends the master device identification code 74 to the slave devices 60, the slave devices 60 send the slave device identification codes 75 to the master device 50, and the master device identification code 74 of the master device 50 is stored in the slave devices 60 and the slave device identification codes 75 of the slave devices 60 are stored in the master device 50. Moreover, the individual setting process is completed at a time point at which the master device 50 transmits the individual setting information 70 to the slave devices 60, and the slave devices 60 complete settings in accordance with the individual setting information 70.

The setting process of the present embodiment is a process in which when an operation is given to the operation input receiving unit 506 of the master device 50, the master device controller 509 of the master device 50 transitions to a setting registration mode of setting the slave devices 60 and starts the setting process. A specific method is similar to the method of the setting process of the alarm system 1 according to the first embodiment, and the description thereof is omitted.

### <Description of System Configuration across Floors>

A system of one group including one group described above is used, for example, in a system configuration shown in FIG. 9. The alarm system 3 of the present embodiment is installed in, for example, a three-story building A1, and one master device 50 which functions as a wired relay and three slave devices 60 (60A, 60B, and 60C) which function as detectors are installed in each of areas.

In this embodiment, one master device 50 and three slave devices 60 installed on each of a first to third floors form a group. The one master device 50 and the three slave devices 60 installed on the first floor form group 1 (G1), one master device 50 and the three slave devices 60 installed on the second floor form group 2 (G2), and one master device 50 and the three slave devices 60 installed on the third floor form group 3 (G3). To the groups G1, G2, and G3, different channel frequencies f (f1, f2, and f3) are assigned, and an alarm belonging to each of the groups transmits and receives a signal by using the channel frequency f assigned to a corresponding one of the groups to which the alarm belongs. Each of the slave devices 60 installed in the groups G1, G2, and G3 is configured to, when detecting a fire, output an alarm sound and transmit a fire detection signal to the master device 50 belonging to the group to which a corresponding one of the slave devices 60 belongs.

Moreover, the master device 50, which is the wired relay, is communicatively connected to an adjacent master device 50 via a wire. The master device 50 serves as a relay between adjacent groups set for respective stories. Thus, in a similar manner to the second embodiment, even in the case where the slave device 60 belonging to any group of the plurality of groups detects a fire, a warning is output from the slave device 60 on another floor in an interconnected manner via the master device 50, and therefore, it becomes possible to reliably inform a user in the building A1 of the outbreak of the fire and to prompt the user to take an appropriate action such as evacuation.

In the case of the system configuration across floors as illustrated in FIG. 9, the setting process is performed for each of the groups G1, G2, and G3 in a similar manner to the second embodiment. That is, the individual setting information 70 stored in the master device 50 in each of the groups is transmitted to the slave devices 60 belonging to the same group, and thereby, the slave devices 60 store the individual setting information 70. Then, the slave device controllers 206 of the slave devices 60 makes setting of the slave devices 60 in accordance with the pieces of individual setting information 70. Here, the master devices 50 in the respective groups are assumed to store different pieces of individual setting information 70. However, this should not be construed as limiting, but all of the master devices 50 may store the same individual setting information 70.

### <Effects, etc.>

In the present embodiment, the case where the master devices 50 are the wired relays has been described, but even when the master devices 50 are replaced with various products, a similar effect to that in the first embodiment can be obtained. That is, the individual setting information 70 stored in each master device 50 can be transmitted to the slave devices 60, and the slave devices 60 can make settings of the slave devices 60 in accordance with the pieces of individual setting information 70. Thus, work required for the setting can be simplified and a time required for registration can be reduced as compared to the case where operations are given one-by-one to store pieces of information required for the setting in the master device 50 and the slave devices 60, and thereafter, the pieces of information thus stored are exchanged between the master device 50 and each of the slave devices 60 to perform the setting registration.

Thus, the slave device stores the data table in which the master device identification codes of the plurality of master devices and individual setting processes relating to a setting of the slave device are associated with each other, and therefore, as long as an alarm has a master device identification code stored in the data table, the alarm is applicable to the master device. Moreover, the slave device is compatible with any alarm which is to be set as a master device, and the slave device can perform an individual setting by itself.

### Reference Signs List

- 1: Alarm System
- 2: Alarm System
- 3: Alarm System
- 10: First Apparatus (Master Device)
- 20: Second Apparatus (Slave Device)
- 30: First Apparatus (Master Device)
- 40: Second Apparatus (Slave Device)
- 50: First Apparatus (Master Device)
- 60: Second Apparatus (Slave Device)
- 70: Individual Setting Information
- 71: Re-output time
- 72: Latch Information
- 73: Communication Protocol
- 74: Master Device Identification Code
- 75: Slave Device Identification Code
- 76: Data Table
- 101: Transceiver
- 102: Detection Unit
- 103: Notifier
- 104: Operation Input Receiving Unit
- 105: Power Source
- 106: First Controller (Master Device Controller)
- 107: Antenna
- 108: Switch
- 109: First Storage (Master Device Storage)
- 201: Transceiver
- 202: Detection Unit
- 203: Notifier
- 204: Operation Input Receiving Unit
- 205: Power Source
- 206: Second Controller (Slave Device Controller)
- 207: Antenna
- 208: Switch
- 209: Second Storage (Slave Device Storage)
- 301: First Transceiver
- 302: Second Transceiver
- 303: Notifier
- 304: Operation Input Receiving Unit
- 305: Power Source
- 306: First Controller (Master Device Controller)
- 307: First Storage (Master Device Storage)
- 308: First Antenna
- 309: Second Antenna
- 310: Switch
- 401: Transceiver
- 402: Detection Unit
- 403: Notifier
- 404: Operation Input Receiving Unit
- 405: Power Source
- 406: Second Controller (Slave Device Controller)
- 407: Antenna
- 408: Switch
- 409: Second Storage (Slave Device Storage)
- 501: Wireless Transceiver
- 502: Wired Transceiver
- 503: Operation Unit
- 504: Notifier
- 505: Display Section
- 506: Operation Input Receiving Unit
- 507: Power Source
- 508: Indicator Light
- 509: First Controller (Master Device Controller)
- 510: First Storage (Master Device Storage)
- 511: Antenna
- 512: Communication Line
- 513: Switch
- 601: Transceiver
- 602: Detection Unit
- 603: Notifier
- 604: Operation Input Receiving Unit
- 605: Power Source
- 606: Second Controller (Slave Device Controller)
- 607: Antenna
- 608: Switch
- 609: Second Storage (Slave Device Storage)

## Claims

1. An alarm system (1, 2, 3) in which a plurality of alarms including a first apparatus (10, 30, 50) which is a master device and a second apparatus (20, 40, 60) which is a slave device cooperate with each other to achieve alarming in an interconnected manner between the plurality of alarms,
the first apparatus (10, 30, 50) including: a first controller (106, 306, 509) configured to execute a setting process of making a setting for interconnected operation between the first apparatus (10, 30, 50) and the second apparatus (20, 40, 60); and a first storage (109, 307, 510) configured to store a master device identification code identifying the first apparatus (10, 30, 50),
the second apparatus (20, 40, 60) including: a second controller (206, 406, 606) configured to execute the setting process between the second apparatus (20, 40, 60) and the first apparatus (10, 30, 50); and a second storage (209, 409, 609) configured to store a plurality of master device identification codes representing types of various alarms expected to be applied to the first apparatus and to store individual setting information associated to each of the master device identification codes, wherein the individual setting information is information regarding a setting of the second apparatus (20, 40, 60),
the first controller (106, 306, 509) being configured to transmit the master device identification code to the second apparatus (20, 40, 60) in the setting process,
the second controller (206, 406, 606) being configured to: when the second controller receives the master device identification code, select the individual setting information corresponding to the master device identification code which the second controller is to set; and to, based on the individual setting information thus selected, make a setting of the second apparatus (20, 40, 60) in the setting process.

2. The alarm system (1, 2, 3) of claim 1, wherein
the individual setting information includes a re-output time indicating an amount of time from when the second apparatus (20, 40, 60) stops outputting an alarm sound to when the second apparatus (20, 40, 60) restarts outputting the alarm sound.

3. The alarm system (1, 2, 3) of claims 1 or 2, wherein
the individual setting information includes information regarding whether or not a latch is provided to the second apparatus (20, 40, 60),
in the case where the latch is provided, the second apparatus (20, 40, 60) continues outputting an alarm sound regardless of operation or a communication state of a detection source of an abnormality, and
in the case where the latch is not provided, the second apparatus (20, 40, 60) stops outputting the alarm sound in accordance with the operation or the communication state of the detection source of the abnormality.

4. The alarm system (1, 2, 3) of any one of claims 1 to 3, wherein
the individual setting information includes a communication protocol corresponding to the first apparatus (10, 30, 50).

5. The alarm system (1, 2, 3) of any one of claims 1 to 4, wherein
the alarm system includes a plurality of the second apparatuses (20, 40, 60), and the first apparatus (10, 30, 50) is configured to transmit the master device identification code to the plurality of second apparatuses (20, 40, 60) at timings shifted from each other.

6. The alarm system (1, 2, 3) of any one of claims 1 to 4, wherein
the alarm system includes a plurality of the second apparatuses (20, 40, 60), and
the first apparatus (10, 30, 50) is configured to multicast the master device identification code to the plurality of second apparatuses (20, 40, 60) which operate with the first apparatus (10, 30, 50) in an interconnected manner.

7. The alarm system (1, 2, 3) of any one of claims 1 to 6, wherein
each of the first apparatus (10, 30, 50) and the second apparatus (20, 40, 60) further includes an operation input receiving unit (104, 204, 304, 404, 506, 604) having a switch (108, 208, 310, 408, 513, 608), and
the first apparatus (10, 30, 50) is configured to, when the switch (108, 208, 310, 408, 513, 608) included in at least one of the first apparatus (10, 30, 50) or the second apparatus (20, 40, 60) receives an operation, transmit the master device identification code to the second apparatus (20, 40, 60).

8. A setting method used in an alarm system (1, 2, 3) in which a plurality of alarms cooperate with each other to achieve alarming in an interconnected manner between the plurality of alarms, including
a first apparatus (10, 30, 50) which is a master device and second apparatus (20, 40, 60) which is a slave device cooperate with each other to achieve alarming in an interconnected manner between the plurality of alarms,
the first apparatus (10, 30, 50) including: a first controller (106, 306, 509) configured to execute a setting process of making a setting for interconnected operation between the first apparatus (10, 30, 50) and the second apparatus (20, 40, 60); and a first storage (109, 307, 510) configured to store a master device identification code identifying the first apparatus (10, 30, 50),
the second apparatus (20, 40, 60) including: a second controller (206, 406, 606) configured to execute the setting process between the second apparatus (20, 40, 60) and the first apparatus (10, 30, 50); and a second storage (209, 409, 609) configured to store a plurality of master device identification codes representing types of various alarms expected to be applied to the first apparatus and to store individual setting information associated to each of the master device identification codes, wherein the individual setting information is information regarding a setting of the second apparatus (20, 40, 60) ,
the setting method comprising;
a transmission step of transmitting the master device identification code from the first controller (106, 306, 509) to the second apparatus (20, 40, 60); and
a setting step of selecting, when the second controller (206, 406, 606) receives the master device identification code, the individual setting information to be set by the second controller (206, 406, 606) and making, based on the individual setting information thus selected, a setting of the second apparatus (20, 40, 60).

9. A program configured to cause a computer to execute the setting method of claim 8.

## Patentansprüche

1. Alarmsystem (1, 2, 3), in dem mehrere Alarme, die eine erste Vorrichtung (10, 30, 50), die eine Master-Vorrichtung ist, und eine zweite Vorrichtung (20, 40, 60), die eine Slave-Vorrichtung ist, aufweisen, miteinander zusammenwirken, um in einer miteinander verbundenen Weise zwischen den mehreren Alarmen eine Alarmierung zu erreichen,
wobei die erste Vorrichtung (10, 30, 50) aufweist: eine erste Steuereinheit (106, 306, 509), die konfiguriert ist, um einen Einstellvorgang zum Vornehmen einer Einstellung für einen Verbundbetrieb zwischen der ersten Vorrichtung (10, 30, 50) und der zweiten Vorrichtung (20, 40, 60) auszuführen; und einen ersten Speicher (109, 307, 510), der konfiguriert ist, um einen Master-Vorrichtungsidentifikationscode zu speichern, der die erste Vorrichtung (10, 30, 50) identifiziert,
die zweite Vorrichtung (20, 40, 60) aufweist: eine zweite Steuereinheit (206, 406, 606), die konfiguriert ist, um den Einstellvorgang zwischen der zweiten Vorrichtung (20, 40, 60) und der ersten Vorrichtung (10, 30, 50) auszuführen; und einen zweiten Speicher (209, 409, 609), der konfiguriert ist, um mehrere Master-Vorrichtungsidentifikationscodes zu speichern, die Typen unterschiedlicher Alarme darstellen, von denen erwartet wird, dass sie auf die erste Vorrichtung angewendet werden, und individuelle Einstellinformationen zu speichern, die jedem der Master-Vorrichtungsidentifikationscodes zugeordnet sind, wobei die individuellen Einstellinformationen Informationen sind, die ein Einstellen der zweiten Vorrichtung (20, 40, 60) betreffen,
die erste Steuereinheit (106, 306, 509) konfiguriert ist, um den Master-Vorrichtungsidentifikationscode an die zweite Vorrichtung (20, 40, 60) in dem Einstellvorgang zu übertragen,
die zweite Steuereinheit (206, 406, 606) konfiguriert ist, um: wenn die zweite Steuereinheit den Master-Vorrichtungsidentifikationscode empfängt, die individuellen Einstellinformationen auszuwählen, die dem Master-Vorrichtungsidentifikationscode entsprechen, den die zweite Steuereinheit einstellen soll; und auf der Grundlage der so ausgewählten individuellen Einstellinformationen ein Einstellen der zweiten Vorrichtung (20, 40, 60) in dem Einstellvorgang vorzunehmen.

2. Alarmsystem (1, 2, 3) nach Anspruch 1, wobei
die individuellen Einstellinformationen eine Wiederausgabezeit enthalten, die eine Zeitspanne angibt, die von dem Zeitpunkt, an dem die zweite Vorrichtung (20, 40, 60) die Ausgabe eines Alarmtons beendet, bis zu dem Zeitpunkt vergeht, an dem die zweite Vorrichtung (20, 40, 60) die Ausgabe des Alarmtons wieder aufnimmt.

3. Alarmsystem (1, 2, 3) nach Anspruch 1 oder 2, wobei
die individuellen Einstellinformationen Informationen darüber enthalten, ob eine Verriegelung für die zweite Vorrichtung (20, 40, 60) vorgesehen ist oder nicht,
in dem Fall, in dem die Verriegelung vorgesehen ist, die zweite Vorrichtung (20, 40, 60) unabhängig von einer Betätigung oder einem Kommunikationszustand einer Erfassungsquelle einer Abnormalität fortfährt, einen Alarmton auszugeben, und
in dem Fall, in dem die Verriegelung nicht vorgesehen ist, die zweite Vorrichtung (20, 40, 60) in Übereinstimmung mit der Betätigung oder dem Kommunikationszustand der Erfassungsquelle der Abnormalität aufhört, den Alarmton auszugeben.

4. Alarmsystem (1, 2, 3) nach einem der Ansprüche 1 bis 3, wobei
die individuellen Einstellinformationen ein Kommunikationsprotokoll enthalten, das der ersten Vorrichtung (10, 30, 50) entspricht.

5. Alarmsystem (1, 2, 3) nach einem der Ansprüche 1 bis 4, wobei
das Alarmsystem mehrere der zweiten Vorrichtungen (20, 40, 60) aufweist, und die erste Vorrichtung (10, 30, 50) konfiguriert ist, um den Master-Vorrichtungsidentifikationscode an die mehreren zweiten Vorrichtungen (20, 40, 60) zu zeitlich versetzten Zeiten zu übertragen.

6. Alarmsystem (1, 2, 3) nach einem der Ansprüche 1 bis 4, wobei
das Alarmsystem mehrere der zweiten Vorrichtungen (20, 40, 60) aufweist, und
die erste Vorrichtung (10, 30, 50) konfiguriert ist, um den Master-Vorrichtungsidentifikationscode in einem Multicast-Verfahren an die mehreren zweiten Vorrichtungen (20, 40, 60) zu senden, die mit der ersten Vorrichtung (10, 30, 50) in einer miteinander verbundenen Weise zusammenwirken.

7. Alarmsystem (1, 2, 3) nach einem der Ansprüche 1 bis 6, wobei
sowohl die erste Vorrichtung (10, 30, 50) als auch die zweite Vorrichtung (20, 40, 60) ferner eine Betätigungseingabe-Empfangseinheit (104, 204, 304, 404, 506, 604) mit einem Schalter (108, 208, 310, 408, 513, 608) enthält, und
die erste Vorrichtung (10, 30, 50) konfiguriert ist, um, wenn der Schalter (108, 208, 310, 408, 513, 608), der in mindestens einer der ersten Vorrichtung (10, 30, 50) oder der zweiten Vorrichtung (20, 40, 60) enthalten ist, eine Betätigung empfängt, den Master-Vorrichtungsidentifikationscode an die zweite Vorrichtung (20, 40, 60) überträgt.

8. Einstellverfahren, das in einem Alarmsystem (1, 2, 3) verwendet wird, in dem mehrere Alarme miteinander zusammenwirken, um eine Alarmierung in einer miteinander verbundenen Weise zwischen den mehreren Alarmen zu erreichen,
umfassend:
Zusammenwirken einer ersten Vorrichtung (10, 30, 50), die eine Master-Vorrichtung ist, und einer zweiten Vorrichtung (20, 40, 60), die eine Slave-Vorrichtung ist, um in einer miteinander verbundenen Weise zwischen den mehreren Alarmen eine Alarmierung zu erreichen,
wobei die erste Vorrichtung (10, 30, 50) aufweist: eine erste Steuereinheit (106, 306, 509), die konfiguriert ist, um einen Einstellvorgang zum Vornehmen einer Einstellung für einen Verbundbetrieb zwischen der ersten Vorrichtung (10, 30, 50) und der zweiten Vorrichtung (20, 40, 60) auszuführen; und einen ersten Speicher (109, 307, 510), der konfiguriert ist, um einen Master-Vorrichtungsidentifikationscode zu speichern, der die erste Vorrichtung (10, 30, 50) identifiziert,
die zweite Vorrichtung (20, 40, 60) aufweist: eine zweite Steuereinheit (206, 406, 606), die konfiguriert ist, um den Einstellvorgang zwischen der zweiten Vorrichtung (20, 40, 60) und der ersten Vorrichtung (10, 30, 50) auszuführen; und einen zweiten Speicher (209, 409, 609), der konfiguriert ist, um mehrere Master-Vorrichtungsidentifikationscodes zu speichern, die Typen unterschiedlicher Alarme darstellen, von denen erwartet wird, dass sie auf die erste Vorrichtung angewendet werden, und individuelle Einstellinformationen zu speichern, die jedem der Master-Vorrichtungsidentifikationscodes zugeordnet werden, wobei die individuellen Einstellinformationen Informationen sind, die eine Einstellung der zweiten Vorrichtung (20, 40, 60) betreffen,
wobei das Einstellverfahren umfasst:
einen Übertragungsschritt des Übertragens des Master-Vorrichtungsidentifikationscodes von der ersten Steuereinheit (106, 306, 509) an die zweite Vorrichtung (20, 40, 60); und
einen Einstellschritt des Auswählens, wenn die zweite Steuereinheit (206, 406, 606) den Master-Vorrichtungsidentifikationscode empfängt, der individuellen Einstellinformationen, die durch die zweite Steuereinheit (206, 406, 606) einzustellen sind, und des Vornehmens einer Einstellung der zweiten Vorrichtung (20, 40, 60) auf der Grundlage der so ausgewählten individuellen Einstellinformationen.

9. Programm, das konfiguriert ist, um einen Computer zu veranlassen, das Einstellverfahren nach Anspruch 8 auszuführen.

## Revendications

1. Système d'alarme (1, 2, 3) dans lequel une pluralité d'alarmes comprenant un premier appareil (10, 30, 50) qui est un dispositif maître et un deuxième appareil (20, 40, 60) qui est un dispositif asservi coopèrent mutuellement pour permettre l'émission d'alarme de manière interconnectée entre la pluralité d'alarmes,
le premier appareil (10, 30, 50) comprenant : un premier dispositif de commande (106, 306, 509) configuré pour exécuter un processus de réglage consistant à effectuer un réglage pour un fonctionnement interconnecté entre le premier appareil (10, 30, 50) et le deuxième appareil (20, 40, 60) ; et un premier stockage (109, 307, 510) configuré pour stocker un code d'identification de dispositif maître identifiant le premier appareil (10, 30, 50),
le deuxième appareil (20, 40, 60) comprenant : un deuxième dispositif de commande (206, 406, 606) configuré pour exécuter le processus de réglage entre le deuxième appareil (20, 40, 60) et le premier appareil (10, 30, 50) ; et un deuxième stockage (209, 409, 609) configuré pour stocker une pluralité de codes d'identification de dispositif maître représentant des types de différentes alarmes devant être appliqués au premier appareil et pour stocker des informations de réglage individuelles associées à chacun des codes d'identification de dispositif maître, dans lequel les informations de réglage individuelles sont des informations concernant un réglage du deuxième appareil (20, 40, 60),
le premier dispositif de commande (106, 306, 509) étant configuré pour transmettre le code d'identification de dispositif maître au deuxième appareil (20, 40, 60) dans le processus de réglage,
le deuxième dispositif de commande (206, 406, 606) étant configuré pour : lorsque le deuxième dispositif de commande reçoit le code d'identification de dispositif maître, sélectionner les informations de réglage individuelles correspondant au code d'identification de dispositif maître que le deuxième dispositif de commande doit régler ; et pour, sur la base des informations de réglage individuelles sélectionnées ainsi, effectuer un réglage du deuxième appareil (20, 40, 60) dans le processus de réglage.

2. Système d'alarme (1, 2, 3) selon la revendication 1, dans lequel
les informations de réglage individuelles comprennent un temps de re-sortie indiquant une quantité de temps du moment auquel le deuxième appareil (20, 40, 60) arrête d'émettre un son d'alarme au moment auquel le deuxième appareil (20, 40, 60) recommence à émettre le son d'alarme.

3. Système d'alarme (1, 2, 3) selon les revendications 1 ou 2, dans lequel
les informations de réglage individuelles comprennent des informations concernant le fait qu'un verrouillage est disposé sur le deuxième appareil (20, 40, 60),
dans le cas où le verrouillage est disposé, le deuxième appareil (20, 40, 60) continue d'émettre un son d'alarme indépendamment de l'état de fonctionnement ou de communication d'une source de détection d'une anomalie, et
dans le cas où le verrouillage n'est pas disposé, le deuxième appareil (20, 40, 60) arrête d'émettre le son d'alarme selon l'état de fonctionnement ou de communication de la source de détection de l'anomalie.

4. Système d'alarme (1, 2, 3) selon l'une quelconque des revendications 1 à 3, dans lequel
les informations de réglage individuelles comprennent un protocole de communication correspondant au premier appareil (10, 30, 50).

5. Système d'alarme (1, 2, 3) selon l'une quelconque des revendications 1 à 4, dans lequel
le système d'alarme comprend une pluralité des deuxièmes appareils (20, 40, 60), et le premier appareil (10, 30, 50) est configuré pour transmettre le code d'identification de dispositif maître à la pluralité de deuxièmes appareils (20, 40, 60) à des moments décalés les uns par rapport aux autres.

6. Système d'alarme (1, 2, 3) selon l'une quelconque des revendications 1 à 4, dans lequel
le système d'alarme comprend une pluralité des deuxièmes appareils (20, 40, 60), et
le premier appareil (10, 30, 50) est configuré pour multidiffuser le code d'identification de dispositif maître à la pluralité de deuxièmes appareils (20, 40, 60) qui fonctionnent avec le premier appareil (10, 30, 50) de manière interconnectée.

7. Système d'alarme (1, 2, 3) selon l'une quelconque des revendications 1 à 6, dans lequel
chacun du premier appareil (10, 30, 50) et du deuxième appareil (20, 40, 60) comprend en outre une unité de réception d'entrée d'opération (104, 204, 304, 404, 506, 604) comportant un commutateur (108, 208, 310, 408, 513, 608), et
le premier appareil (10, 30, 50) est configuré pour, lorsque le commutateur (108, 208, 310, 408, 513, 608) inclus dans au moins l'un du premier appareil (10, 30, 50) ou du deuxième appareil (20, 40, 60) reçoit une opération, transmettre le code d'identification de dispositif maître au deuxième appareil (20, 40, 60).

8. Procédé de réglage utilisé dans un système d'alarme (1, 2, 3) dans lequel une pluralité d'alarmes coopère mutuellement pour permettre l'émission d'alarme de manière interconnectée entre la pluralité d'alarmes, comprenant
un premier appareil (10, 30, 50) qui est un dispositif maître et un deuxième appareil (20, 40, 60) qui est un dispositif asservi coopèrent mutuellement pour permettre l'émission d'alarme de manière interconnectée entre la pluralité d'alarmes,
le premier appareil (10, 30, 50) comprenant : un premier dispositif de commande (106, 306, 509) configuré pour exécuter un processus de réglage consistant à effectuer un réglage pour un fonctionnement interconnecté entre le premier appareil (10, 30, 50) et le deuxième appareil (20, 40, 60) ; et un premier stockage (109, 307, 510) configuré pour stocker un code d'identification de dispositif maître identifiant le premier appareil (10, 30, 50),
le deuxième appareil (20, 40, 60) comprenant : un deuxième dispositif de commande (206, 406, 606) configuré pour exécuter le processus de réglage entre le deuxième appareil (20, 40, 60) et le premier appareil (10, 30, 50) ; et un deuxième stockage (209, 409, 609) configuré pour stocker une pluralité de codes d'identification de dispositif maître représentant des types de différentes alarmes devant être appliqués au premier appareil et pour stocker des informations de réglage individuelles associées à chacun des codes d'identification de dispositif maître, dans lequel les informations de réglage individuelles sont des informations concernant un réglage du deuxième appareil (20, 40, 60),
le procédé de réglage comprenant ;
une étape de transmission étape consistant à transmettre le code d'identification de dispositif maître du premier dispositif de commande (106, 306, 509) au deuxième appareil (20, 40, 60) ; et
une étape de réglage consistant à sélectionner, lorsque le deuxième dispositif de commande (206, 406, 606) reçoit le code d'identification de dispositif maître, les informations de réglage individuelles devant être réglées par le deuxième dispositif de commande (206, 406, 606) et effectuer, sur la base des informations de réglage individuelles sélectionnées ainsi, un réglage du deuxième appareil (20, 40, 60).

9. Programme configuré pour amener un ordinateur à exécuter le procédé de réglage selon la revendication 8.
